# EUROPÄISCHE PATENTSCHRIFT

(11) **EP 4 306 811 B1**
(45) Veröffentlichungstag und Bekanntmachung des Hinweises auf die Patenterteilung: **19.03.2025**
(21) Anmeldenummer: 22184024.2
(22) Anmeldetag: 11.07.2022
(51) Int. Cl.: F16B 7/22, F16B 43/02, E04B 1/26

(54) **VERBINDER FÜR ZWEI BAUTEILE, INSBESONDERE HOLZBAUTEILE**
CONNECTOR FOR TWO COMPONENTS, IN PARTICULAR WOODEN COMPONENTS
DISPOSITIF DE LIAISON POUR DEUX COMPOSANTS, EN PARTICULIER COMPOSANTS EN BOIS

(43) Veröffentlichungstag der Anmeldung: 17.01.2024
(73) Patentinhaber: Knapp GmbH, 3324 Euratsfeld (AT)
(72) Erfinder: KNAPP, Friedrich, 4362 Bad Kreuzen (AT)
(74) Vertreter: Weiser Voith Gugler Patentanwälte Partnerschaft

(56) Entgegenhaltungen:
- EP-A1- 3 985 189
- EP-A2- 2 093 334
- US-A1- 2019 390 455

## Beschreibung

Die vorliegende Erfindung betrifft einen Verbinder für zwei Bauteile, insbesondere Holzbauteile. Der Verbinder umfasst zwei Beschläge, von welchen jeder eine Montageseite zur Montage an jeweils einem der Bauteile und eine der Montageseite gegenüberliegende Anlageseite zur Anlage am jeweils anderen der Bauteile hat, wobei die beiden Beschläge an einer die Montage- und Anlageseite verbindenden Stirnseite ineinander einhängbar sind, wozu die Stirnseite über ihre gesamte, entlang der Anlageseite verlaufende Länge einen mit der Anlageseite bündigen Absatz hat, dessen Breite in Orthogonalrichtung zur Anlageseite im Wesentlichen der halben Breite der Stirnseite entspricht.

Verbinder solcher Art eignen sich besonders zum Aufbau von Schwerlastverbindungen im Ingenieurholzbau, beispielsweise zum Verbinden von Haupt-, Neben- oder Querträgern, Querzügen, Bindern, Stützen, Pfosten, Wänden od.dgl. Die Beschläge sind aus Metall, z.B. hochfestem Aluminium oder Stahl, und die zu verbindenden Bauteile aus Holz, insbesondere Brettschichtholz (BSH), Leimbindern usw. Zumindest einer der Bauteile kann alternativ z.B. aus Beton, Stein, Mauerwerk oder sogar Metall sein. Beispielsweise zeigt die EP 3 985 189 Al einen Verbinder mit einem vergleichbaren Absatz an seiner Stirnseite.

Die Beschläge solcher Verbinder sind zwar meist hochfest aber kaum elastisch, sodass sie unter starken Laststößen, z.B. bei einem Erdbeben oder einer plötzlichen Belastungsspitze, zum Brechen neigen und häufige Wechsellasten auch geringeren Ausmaßes zu Ermüdungsbrüchen führen können. Aufgrund der oft mehrfachen Verschraubung der Beschläge mit ihren jeweiligen Bauteilen, führt dies nicht in jedem Fall zum unmittelbaren Versagen des Verbinders, schwächt die Verbindung jedoch entscheidend, oft unbemerkt bis zum späteren völligen Versagen.

Die Erfindung setzt sich zum Ziel, einen Verbinder für eine besonders langlebige Verbindung von Bauteilen auch unter hoher Wechsel- und Spitzenbelastung der Bauteile zu schaffen.

Dieses Ziel wird mit einem Verbinder der einleitend genannten Art erreicht, der sich erfindungsgemäß dadurch auszeichnet, dass die Beschläge aus Holz, bevorzugt aus Sperrholz, oder aus Holz-Kunststoff-Verbundwerkstoff sind und jeder Beschlag an seiner Anlageseite ein oder mehrere allgemein-zylindrische Sacklöcher hat, wobei der Verbinder ferner für jedes Sackloch ein Formstück zum herausnehmbaren Einsetzen in das Sackloch umfasst, das eine Grundfläche, eine dazu parallele Deckfläche, eine diese beiden verbindende, im Wesentlichen allgemein-zylindrische Mantelfläche und eine das Formstück unter einem zu Grund- und Deckfläche spitzen Winkel durchsetzende Schrägbohrung für eine Montageschraube hat.

Beim ineinander Einhängen werden die genannten Stirnseiten der Beschläge aufeinander gelegt, wobei die genannten Absätze einander hintergreifen, was zu einer sicheren Verbindung der Bauteile führt. Dabei ist Holz bzw. Holz-Kunststoff-Verbundwerkstoff trotz seiner jeweiligen Festigkeit, wobei Sperrholz besonders hohe Festigkeitswerte erzielt, auch elastisch, sodass einerseits Ermüdungserscheinungen und -brüche wesentlich unwahrscheinlicher sind und andererseits große Laststöße gedämpft werden, was die Gefahr eines Bruchs wesentlich reduziert und die Lebensdauer des Verbinders und der Verbindung verlängert. Holz-Kunststoff-Verbundwerkstoffe ("HKV", auch "Wood-Plastic-Composites" bzw. "WPC") werden aus Holz - meist Holzmehl - und Kunststoffen sowie Additiven, einschließlich Flammschutzmittel, hergestellt und sind ähnlich wie Kunststoffe zu verarbeiten.

Selbst wenn Metallbeschläge im Allgemeinen eine höhere Festigkeit haben, ist zu beachten, dass aus Brandschutzgründen Metallbeschläge meist feuersicher zu ummanteln sind. Beim Verbinden von Holzbauteile wird die Ummantelung meist dadurch erzielt, dass die Beschläge eingesenkt und so vom umgebenden Holz der Holzbauteile vor Hitze und Feuer geschützt werden. Einerseits erschwert das Einsenken die Montage, andererseits reduziert die Ummantelung die mögliche Baugröße der Beschläge: die Beschläge müssen um die Dicke der Ummantelung kleiner sein als die Anlageflächen der Bauteile aneinander. Im Gegensatz dazu können die Holz- bzw. HKV-Beschläge die gesamten Anlageflächen nutzen und sind daher größer als Metallbeschläge für dieselben Bauteile, was der Festigkeit zugutekommt.

Die Formstücke könnten ebenfalls aus Holz bzw. HKV oder aus herkömmlichem Kunststoff, z.B. einem faserverstärkten Kunststoff, sein. Bevorzugt ist hingegen jedes Formstück aus Metall, besonders bevorzugt aus Stahl. Diese Ausführungsform nutzt die Festigkeit von Metall, insbesondere Stahl. Die festen Formstücke aus Metall führen zu einer besonders guten Kraftübertragung zwischen Montageschrauben und Beschlag. Da jedes Formstück in der Montagestellung einzeln in ein Sackloch des (elastischen) Beschlags eingesetzt ist, ist die Bruchgefahr selbst bei sehr hohen Belastungen oder infolge Ermüdung äußerst gering.

Um eine gute Feuerbeständigkeit des Verbinders zu erzielen, ist vorteilhaft, wenn jedes der Sacklöcher jedes Beschlags vom Umfang seiner Anlageseite einen Mindestabstand von 2 cm, bevorzugt zwischen 4 und 6,5 cm hat. Durch die Wahl des Mindestabstandes sind allfällige Erfordernisse an den Brandschutz einfach erfüllbar.

Die Beschläge können je nach Bedarf mit Formstücken verwendet werden, die sich in der Größe des spitzen Winkels unterscheiden, z.B. um eine Anpassung an verschiedene Faserrichtungen von Holzbauteilen zu erreichen. Zur Vorbereitung einer raschen Montage vor Ort ist hingegen günstig, wenn von jedem der Sacklöcher jedes Beschlags eine in Richtung der genannten Stirnseite des Beschlags geneigte, die Montageseite durchsetzende Bohrung ausgeht, welche derart angeordnet und ausgerichtet ist, dass beim Einsetzen eines Formstücks seine Schrägbohrung damit in Flucht bringbar ist. Dies erleichtert auch das korrekte Eindrehen der Montageschrauben.

Je nach Werkstoff und Belastung der Bauteile, z.B. der Holz-Faserrichtung von Holzbauteilen, beträgt bevorzugt der genannte spitze Winkel zwischen 15° und 60°, besonders bevorzugt zwischen 25° und 50°. Dies führt zu einer zuverlässigen, festen Verbindung der Bauteile.

Zur gleichmäßigen Krafteinleitung vom einen in den jeweils anderen Bauteil ist vorteilhaft, wenn jeder Beschlag zumindest zwei Sacklöcher hat, wobei die Sacklöcher spiegelsymmetrisch zu einer zur genannten Stirnseite orthogonalen, diese halbierenden Achse der Anlageseite angeordnet sind. In höherer Anzahl leiten die Montageschrauben nicht nur die Kräfte gleichmäßiger in den jeweiligen Bauteil ein, sondern verfestigt im Falle eines Holzbauteils zusätzlich das Holz im Bereich der Beschläge.

Günstig ist ferner, wenn jeder Beschlag an der genannten Stirnseite eine zentrale, zur Stirnseite orthogonale Stirnbohrung hat, in welche ein Stift oder eine Schraube einführbar ist. Die Beschläge sind so gegen ein Verrutschen entlang des Absatzes, d.h. parallel sowohl zu der Stirn- als auch zu der Anlageseite, gesichert. Wird der Stift (oder die Schraube) vor dem ineinander Einhängen der Beschläge in die Stirnbohrung eines Beschlags eingeführt, entfaltet er zusätzlich eine Zentrierwirkung beim ineinander Einhängen. Alternativ dazu kann in einer vorteilhaften Ausführungsform der Stift oder die Schraube erst nach dem Einhängen eingesetzt werden, wozu zumindest einer der Beschläge von der genannten Stirnbohrung vollständig durchsetzt ist.

Besonders günstig ist, wenn mit zunehmender Höhe des Absatzes an der Stirnseite jedes Beschlags seine Breite abnimmt und auf halber Höhe der halben Breite der Stirnseite entspricht. Die beim ineinander Einhängen der beiden Beschläge miteinander in Kontakt tretenden Kontaktflächen der Absätze sind somit schräg, u.zw. derart, dass die Bauteile beim Einhängen aneinander gezogen werden. Das vereinfacht das Einhängen und garantiert einen sicheren Sitz der Bauteile aneinander.

Zum Schutz der Beschläge vor scharfkantiger Belastung durchsetzt bevorzugt die Schrägbohrung jedes Formstücks seine Grundfläche, ohne die Kante zwischen Grundfläche und Mantelfläche zu berühren. Diese Kante läuft somit ohne eckige bzw. scharfkantige Unterbrechung rund um die Grundfläche des Formstücks um und liegt dadurch selbst bei hoher Zugbelastung durch die Montageschraube für den Beschlag schonend im Sackloch an.

Günstig ist, wenn die Formstücke nach dem Einsetzen in die Sacklöcher bündig mit der Anlageseite sind, wozu die Sacklöcher eine Tiefe haben, die der Dicke der Formstücke von ihren Grundzu ihren Deckflächen entspricht. Dadurch kann einerseits die Anlageseite nach Montage vollflächig am jeweils anderen Bauteil anliegen, wodurch die Verbindung stabilisiert ist. Andererseits bleibt kein Bauraum ungenutzt bzw. wird die Festigkeit der Beschläge nicht durch übermäßig tiefe Sacklöcher herabgesetzt.

In einer vorteilhaften Ausführungsform ist ferner jedes Formstück im Sackloch formschlüssig aufnehmbar und hat das Sackloch an einem der genannten Stirnseite abgewandten Bereich eine Ausnehmung zum Eindrehen der Montageschraube. Das Sackloch ist somit an die allgemein-zylindrische Form des Formstücks angepasst und das Formstück liegt mit seiner Grundfläche und - weitgehend - seinen Mantelflächen am Sackloch an, woraus eine gute Krafteinleitung von der Montageschraube über das Formstück in das Sackloch und den Beschlag resultiert. Dennoch ist die Montageschraube ungehindert eindrehbar.

Günstig ist ferner, wenn die Grundfläche jedes Formstücks rund ist. Ein dazu komplementäres Sackloch im Beschlag ist besonders einfach durch Fräsen oder Bohren herstellbar. Ferner ist die Krafteinleitung eines runden Formstücks in den Beschlag besonders gleichmäßig, da lokale Kraftspitzen, die z.B. an Ecken eines eckigen Formstücks aufträten, vermieden werden.

In einer bevorzugten Ausführungsform ist jeder Beschlag von zumindest einer zur Montageseite orthogonalen, der genannten Stirnseite benachbarten Geradebohrung für eine Zugschraube durchsetzt ist. Solche geraden Zugschrauben werden bei der Montage eines Beschlags am Bauteil vor den schrägen Montageschrauben eingedreht, wodurch das Schrägverschrauben ohne Versatz des Beschlags am Bauteil wesentlich erleichtert und der korrekte Sitz sichergestellt sind. Ferner wirkt die rein auf Zug belastete Zugschraube, einem Abheben des Beschlags vom Bauteil bei einer Zugbelastung zwischen den beiden Bauteilen entgegen.

Um die Festigkeit der Verbindung weiter zu erhöhen ist günstig, wenn der Verbinder ferner zumindest zwei die Schrägbohrung jedes Formstücks flankierende, das Formstück etwa orthogonal zur Grund- und Deckfläche durchsetzende weitere Bohrungen für jeweils eine weitere Schraube hat. Diese weiteren Schrauben helfen, die Bauteile, insbesondere Holzbauteile, im Bereich der Beschläge zu verfestigen.

Die Erfindung wird nachfolgend anhand von in den beigeschlossenen Zeichnungen dargestellten Beispielen näher erläutert. In den Zeichnungen zeigen:
die Fig 1a und 1b einen erfindungsgemäßen Verbinder mit zwei zu verbindenden Bauteilen in einer nicht-verbundenen (Fig. la) und einer verbundenen Stellung (Fig. 1b), jeweils in einer Perspektivansicht von vorne;
die Fig. 2a und 2b einen Beschlag des erfindungsgemäßen Verbinders in einer Perspektivansicht von vorne (Fig. 2a) bzw. von hinten (Fig. 2b);
Fig. 3 ein Formstück des erfindungsgemäßen Verbinders für die Beschläge der Fig. 2a und 2b in einer Perspektivansicht von oben;
Fig. 4 eine Variante des Beschlags der Fig. 2a und 2b mit eingesetzten Montageschrauben in Perspektivansicht von hinten;
Fig. 5 eine Variante des erfindungsgemäßen Verbinders in verbundener Stellung ohne die Bauteile in einer Perspektivansicht von vorne;
Fig. 6 eine Variante des Formstücks des erfindungsgemäßen Verbinders in einer Perspektivansicht von oben; und
Fig. 7 eine weitere Variante des erfindungsgemäßen Verbinders mit eingesetzten Formstücken in verbundener Stellung ohne die Bauteile gemäß Fig. 6 in einer Perspektivansicht von vorne.

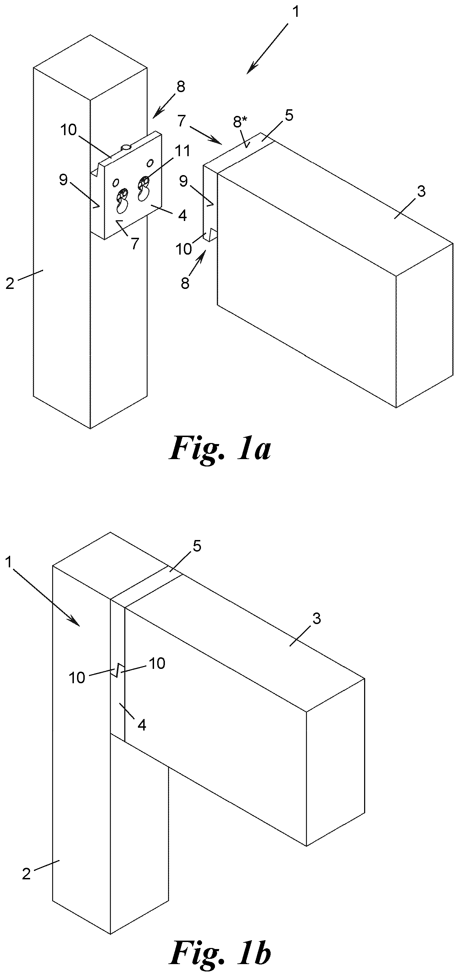

Die Fig. 1a und 1b zeigen einen Verbinder 1 für zwei Bauteile 2, 3. Der eine Bauteil 2 ist beispielsweise eine Stütze, eine Wand od. dgl., hier: ein Pfosten. Der andere Bauteil 3 ist beispielsweise ein Haupt-, Neben- oder Querträger, ein Querzug, ein Binder od. dgl., hier: ein Träger. Die zu verbindenden Bauteile sind z.B. aus Holz, insbesondere Brettschichtholz (BSH), Leimbindern usw. Zumindest einer der Bauteile ist optional aus einem anderen Werkstoff, beispielsweise aus Beton, Stein, Mauerwerk oder sogar Metall.

Der Verbinder 1 umfasst zwei Beschläge 4, 5 aus Holz, optional aus Sperrholz, oder aus Holz-Kunststoff-Verbundwerkstoff. Holz-Kunststoff-Verbundwerkstoffe ("HKV"), die auch unter den Bezeichnungen "Wood-Plastic-Composites" ("WPC") bzw. "Holz(faser)-Polymer-Verbundwerkstoffe" bekannt sind, werden aus Holz - meist Holzmehl - und Kunststoffen sowie Additiven (hier: insbesondere Flammschutzmittel) hergestellt und sind ähnlich wie Kunststoffe verarbeitbar. Es versteht sich, dass dabei optional auch z.B. einer der beiden Beschläge 4, 5 aus Holz und der andere aus HKV gefertigt sein könnte.

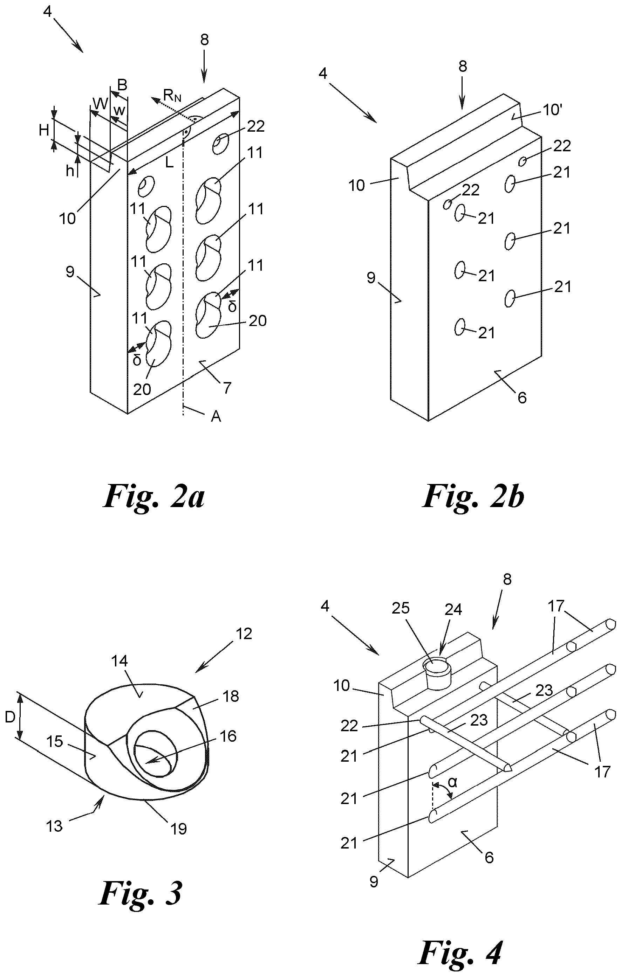

Jeder Beschlag 4, 5 hat z.B. die Form einer - optional rechteckigen - Platte mit einer (in den Fig. 1a und 1b nicht sichtbaren) Montageseite 6 (Fig. 2b), einer der Montageseite 6 gegenüberliegenden Anlageseite 7 und einer die Montage- und Anlageseite 6, 7 verbindenden Stirnseite 8; im Fall der RechteckForm haben die Beschläge 4, 5 ferner zwei Lateralseiten 9 und eine weitere, der genannten Stirnseite 8 gegenüberliegende, hier nicht weiter interessierende Stirnseite 8*, welche jeweils die Montage- und Anlageseite 6, 7 verbinden. Jeder Beschlag 4, 5 wird mit seiner Montageseite 6 an jeweils einem der Bauteile 2, 3 montiert, d.h. im Beispiel der Fig. 1a der linke Beschlag 4 mit seiner Montageseite 6 am linken Bauteil 2 und der rechte Beschlag 5 mit seiner Montageseite 6 am rechten Bauteil 3.

An der genannten Stirnseite 8, die in Fig. 1a am linken Beschlag 4 oben und am rechten Beschlag 5 unten liegt, sind die beiden Beschläge 4, 5 ineinander einhängbar. In der ineinander eingehängten Stellung (Fig. 1b) liegen die Anlageseiten 7 jedes Beschlags 4, 5 am jeweils anderen der Bauteile 3, 2 an, d.h. an jenem Bauteil 3, 2, an welchem der Beschlag 4, 5 jeweils nicht montiert ist.

In den Fig. 2a und 2b ist nur einer der Bauteile 4, 5 (hier: Bauteil 4) dargestellt, da die beiden Beschläge 4, 5 im vorliegenden Beispiel baugleich sind. Gemäß den Fig. 1a, 1b, 2a und 2b hat zum ineinander Einhängen die Stirnseite 8 jedes der Beschläge 4, 5 über ihre gesamte, entlang der Anlageseite 7 verlaufende Länge L - die zugleich der Breite der Anlageseite 7 entspricht - einen Absatz 10 der Höhe H, der mit der Anlageseite 7 bündig ist; dadurch überragt die Anlageseite 7 an der Stirnseite 8 gleichsam die Montageseite 6 um die Höhe H des Absatzes 10. Die Breite B des Absatzes 10, d.h. seine Erstreckung in Orthogonalrichtung R_{N} zur Anlageseite 7 entspricht im Wesentlichen der halben Breite w der Stirnseite 8, d.h. der Hälfte ihrer Erstreckung W in derselben Richtung. Die genannte Stirnseite 8 hat somit eine an die Anlageseite 7 grenzende (um die Höhe H) höhere und eine an die Montageseite 6 grenzende tiefere Hälfte. Dadurch entsteht beim Montieren des einen Beschlags 4 (mit seiner Stirnseite nach oben) am einen Bauteil 2 und des anderen Beschlags 5 (mit seiner Stirnseite nach unten) am anderen Bauteil 3 hinter den Absätzen 10 jeweils eine Hinterschneidung, in welche Hinterschneidungen die Absätze 10 beim ineinander Einhängen gegenseitig eingreifen und so die Bauteile miteinander verbinden.

Dass die Breite B des Absatzes 10 "im Wesentlichen" der halben Breite w der Stirnseite 8 entspricht, bedeutet hier, dass mit zunehmender Höhe des Absatzes 10 seine Breite optional abnimmt und dabei auf halber Höhe h der halben Breite w der Stirnseite 8 entspricht. In diesem Fall ist somit die gegenseitige Kontaktfläche 10' der Absätze 10 der beiden Beschläge 4, 5 schräg, sodass die Beschläge 4, 5 beim ineinander Einhängen zueinander in Flucht und die Bauteile 2, 3 aneinander gezogen werden.

Zum Montieren am jeweiligen Bauteil 2, 3 hat jeder Beschlag 4, 5 an seiner Anlageseite 7 ein einziges oder mehrere allgemein-zylindrische Sacklöcher 11. In den dargestellten Beispielen haben die Beschläge 4, 5 zumindest zwei Sacklöcher 11. Dabei sind die Sacklöcher spiegelsymmetrisch zu einer Achse A der Anlageseite 7 angeordnet, welche zur genannten Stirnseite 8 orthogonal ist und diese halbiert, d.h. in der Hälfte ihrer Länge L von der Stirnseite 8 ausgeht. Bei den dargestellten rechteckigen Beschlägen 4, 5 steht die genannte Achse A somit senkrecht zur Stirnseite 8 und verläuft mittig über die Anlageseite 7. Hat in dieser Variante zumindest einer der Beschläge 4, 5 eine ungerade Anzahl von Sacklöchern 11, ist zumindest eines der Sacklöcher 11 an der Achse A angeordnet.

Aus Gründen des Brandschutzes ist, falls erforderlich, optional jedes der Sacklöcher 11 jedes Beschlags 4, 5 vom Umfang seiner Anlageseite 7 beabstandet; es hat je nach Brandschutzerfordernis einen Mindestabstand δ von zumindest 2 cm, bei höherem Brandschutz zwischen 4 und 6,5 cm. Der Mindestabstand δ eines Sacklochs 11 ist jener Abstand, welchen das Sackloch 11 vom nächstliegenden Abschnitt des Umfangs der Anlageseite 7 hat.

Fig. 3 zeigt ein Beispiel für ein Formstück 12. Der Verbinder 1 umfasst für jedes Sackloch 11 ein derartiges Formstück 12, das in das Sackloch 11 herausnehmbar eingesetzt werden kann. Die Formstücke 12 sind meist aus einem anderen Werkstoff als die Beschläge 4, 5, insbesondere aus einem - optional faserverstärkten - Kunststoff oder aus Metall, bevorzugt aus Stahl oder Aluminium. Selbst wenn Formstücke 12 im Einzelfall aus Holz sein könnten, sind sie immer separat von den Beschlägen 4, 5.

Jedes Formstück 12 hat eine Grundfläche 13, eine dazu parallele Deckfläche 14 und eine die Grund- und Deckfläche 13, 14 verbindende Mantelfläche 15, die im Wesentlichen allgemein-zylindrisch ist; "im Wesentlichen" allgemein-zylindrisch deshalb, weil jedes Formstück 12 eine Schrägbohrung 16 für eine Montageschraube 17 (Fig. 4) hat, die das Formstück 12 unter einem zu seiner Grund- und Deckfläche 13, 14 spitzen Winkel α durchsetzt, weshalb Deck- und Mantelfläche 14, 15 quer zur Schrägbohrung 16 eine optionale Abschrägung 18 zur besseren Anlage eines Kopfes der Montageschraube 17 haben.

Der spitze Winkel α beträgt je nach Anforderung und Material der Bauteile 2, 3 zwischen 15 und 60 Grad; in den meisten Fällen liegt er zwischen 25 und 50 Grad, beim Formstück 12 der Fig. 3 bei etwa 45° (Fig. 4).

Damit die Anlageseiten 7 der Beschläge 4, 5 in der ineinander eingehängten Stellung am jeweils anderen Bauteil 2, 3 flächig anliegen, haben die Sacklöcher 11 optional eine Tiefe, die der Dicke D der Formstücke 12 von ihren jeweiligen Grundzu ihren Deckflächen 13, 14 entspricht oder größer ist.

Im Beispiel der Fig. 3 durchsetzt die Schrägbohrung 16 die Grundfläche 13 des Formstücks 12 ohne dabei die Kante 19 zwischen Grundfläche 13 und Mantelfläche 15 zu berühren bzw. zu durchsetzen. Die Kante 19 läuft somit ohne Unterbrechung rund um die Grundfläche 13.

Ferner hat das in Fig. 3 dargestellte Formstück 12 eine runde Grundfläche 13; andere Formen, z.B. oval, nierenförmig oder vieleckig, sind alternativ möglich. Optional sind die Sacklöcher 11 nicht nur an die Dicken D, sondern auch an die Formen der Formstücke 12, insbesondere die Formen ihrer Grundflächen 13 angepasst, sodass jedes Formstück 12 im Sackloch 11 formschlüssig aufgenommen wird. Dabei kann das Sackloch 11 an einem der Stirnseite 8 seines Beschlags 4, 5 abgewandten Bereich eine Ausnehmung 20 zum leichteren Eindrehen der Montageschraube 17 haben. Im Beispiel der Fig. 2a ist dazu jedes Sackloch 11 durch zwei einander überlappende Sackbohrungen hergestellt, sodass es einen etwa 8-förmigen Querschnitt hat, in dessen der Stirnseite 8 zugewandten (hier: oberen) Teil das Formstück 12 mit seiner gemäß Fig. 3 runden Grundfläche 13 einsetzbar ist und in dessen anderen (hier: unteren) Teil die Ausnehmung 20 verbleibt.

Gemäß dem Beispiel der Fig. 2b und 4 haben die Beschläge 4, 5 (hier: der Beschlag 4) Bohrungen 21, welche vom Sackloch 11 ausgehend in Richtung der Stirnseite 8 geneigt sind und die Montageseite 6 durchsetzen. Diese geneigten Bohrungen 21 sind in den Sacklöchern 11 derart angeordnet und ausgerichtet, dass beim Einsetzen jeweils eines Formstücks 12 seine Schrägbohrung 16 mit der geneigten Bohrung 21 in Flucht gebracht werden kann, d.h. die Schrägbohrung 16 und die geneigte Bohrung 21 verlaufen in demselben spitzen Winkel α, sodass die Montageschraube 17 geradlinig und ungehindert durch das Formstück 12 und die geneigte Bohrung 21 in den Bauteil 2, 3 gedreht werden kann.

Optional hat ferner jeder Beschlag 4, 5 zumindest eine - im Beispiel der Fig. 2b und 4: zwei - zur Montageseite 6 orthogonale Geradebohrungen 22 für jeweils eine Zugschraube 23, welche der Stirnseite 8 des Beschlags 4, 5 benachbart, d.h. nahe, sind und den Beschlag 4, 5 durchsetzen. Mit den Zugschrauben 23 wird der Beschlag 4, 5 beispielsweise vor dem Eindrehen der Montageschrauben 17 am jeweiligen Bauteil 2, 3 fixiert.

Alternativ oder ergänzend kann der Beschlag 4, 5 an seiner Montageseite 6 mit dem jeweiligen Bauteil verklebt werden.

Gemäß dem in Fig. 4 gezeigten Beispiel kann jeder Beschlag 4, 5 an seiner Stirnseite 8 eine Stirnbohrung 24 haben, welche im Zentrum der Stirnseite 8 orthogonal zu dieser in den Beschlag 4, 5 gesetzt ist. Die Stirnbohrung 24 kann dabei insbesondere eine Sackbohrung sein. In die optionale Stirnbohrung 24 ist z.B. ein Stift 25 einsetzbar, sodass die beiden Beschläge 4, 5 beim ineinander Einhängen zentriert werden und danach in Längsrichtung der Stirnseite 8 vom Stift 25 arretiert sind.

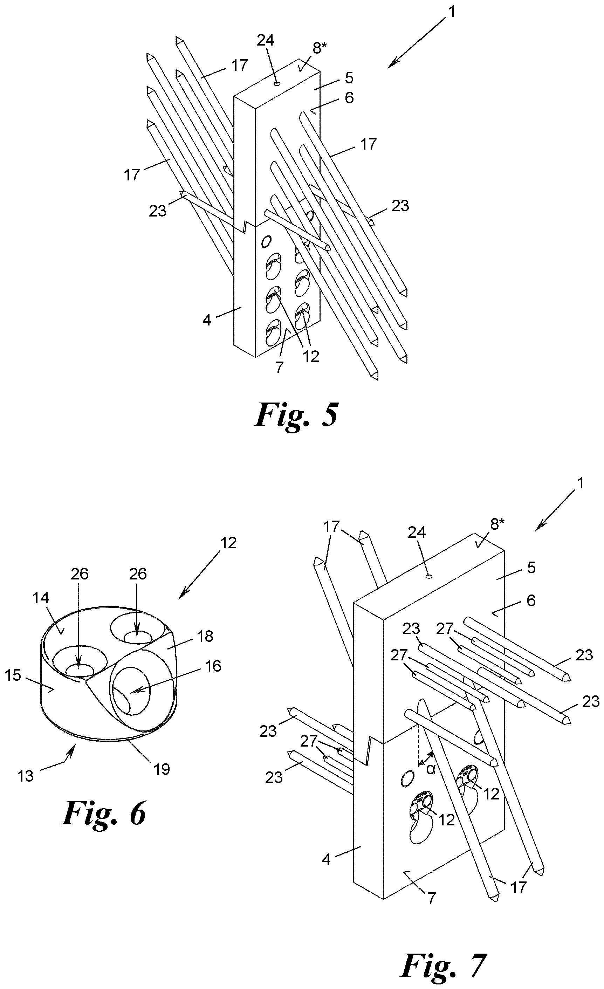

Eine Alternative dazu zeigt Fig. 5, in welcher der Stift 25 des Beispiels der Fig. 4 ist dabei durch eine (in Fig. 5 nicht sichtbare, da versenkte) Schraube ersetzt ist, die in die Stirnbohrung 24 eingedreht ist. Die Stirnbohrung 24 durchsetzt dazu den in Fig. 5 oberen Beschlag 5 von oben nach unten vollständig. Anstelle der Schraube könnte auch in diesem Beispiel ein Stift 25 in die Stirnbohrung 24 eingesetzt sein.

Es sei angemerkt, dass zum genannten Arretieren und ebenso zum Schutz vor unerwünschtem Ausheben des einen aus dem anderen Beschlag 4, 5 und zur weiteren Festigung der Verbindung der Bauteile 2, 3 die Anlageseiten 7 der Beschläge 4, 5 optional mit dem jeweils anderen Bauteil 3, 2 verklebt werden können.

Die Fig. 6 und 7 zeigen eine weitere Ausführungsform des Verbinders 1, in welcher jedes Formstück 12 durch zumindest zwei (hier: genau zwei) die Schrägbohrung 16 flankierende und das Formstück 12 etwa orthogonal zur Grund- und Deckfläche 13, 14 durchsetzende weitere Bohrungen 26 für jeweils eine weitere Schraube 27 durchsetzen. Fig. 7 zeigt dazu die ineinander eingehängte Stellung der beiden Beschläge 4, 5 - zur besseren Sichtbarkeit ohne die Bauteile 2, 3. Der spitze Winkel α beträgt in diesem Fall etwa 30°.

Die Erfindung ist nicht auf die dargestellten Ausführungsbeispiele beschränkt, sondern umfasst jene Varianten, Modifikationen und deren Kombinationen die in den Rahmen der angeschlossenen Ansprüche fallen.

## Patentansprüche

1. Verbinder für zwei Bauteile (2, 3), insbesondere Holzbauteile, umfassend zwei Beschläge (4, 5), von welchen jeder eine Montageseite (6) zur Montage an jeweils einem der Bauteile (2, 3) und eine der Montageseite (6) gegenüberliegende Anlageseite (7) zur Anlage am jeweils anderen der Bauteile (3, 2) hat, wobei die beiden Beschläge (4, 5) an einer die Montage- und Anlageseite (6, 7) verbindenden Stirnseite (8) ineinander einhängbar sind, wozu die Stirnseite (8) über ihre gesamte, entlang der Anlageseite (7) verlaufende Länge (L) einen mit der Anlageseite (7) bündigen Absatz (10) hat, dessen Breite (B) in Orthogonalrichtung (R_{N}) zur Anlageseite (7) im Wesentlichen der halben Breite (w) der Stirnseite (8) entspricht,
**dadurch gekennzeichnet, dass** die Beschläge (4, 5) aus Holz, bevorzugt aus Sperrholz, oder aus Holz-Kunststoff-Verbundwerkstoff sind und jeder Beschlag (4, 5) an seiner Anlageseite (7) ein oder mehrere allgemein-zylindrische Sacklöcher (11) hat, wobei der Verbinder (1) ferner für jedes Sackloch (11) ein Formstück (12) zum herausnehmbaren Einsetzen in das Sackloch (11) umfasst, das eine Grundfläche (13), eine dazu parallele Deckfläche (14), eine diese beiden verbindende, im Wesentlichen allgemein-zylindrische Mantelfläche (15) und eine das Formstück (12) unter einem zu Grund- und Deckfläche (13, 14) spitzen Winkel (α) durchsetzende Schrägbohrung (16) für eine Montageschraube (17) hat.

2. Verbinder nach Anspruch 1, **dadurch gekennzeichnet, dass** jedes Formstück (12) aus Metall, bevorzugt aus Stahl, ist.

3. Verbinder nach Anspruch 1 oder 2, **dadurch gekennzeichnet, dass** jedes der Sacklöcher (11) jedes Beschlags (4, 5) vom Umfang seiner Anlageseite (7) einen Mindestabstand (δ) von 2 cm, bevorzugt zwischen 4 und 6,5 cm hat.

4. Verbinder nach einem der Ansprüche 1 bis 3, **dadurch gekennzeichnet, dass** von jedem der Sacklöcher (11) jedes Beschlags (4, 5) eine in Richtung der genannten Stirnseite (8) des Beschlags (4, 5) geneigte, die Montageseite (6) durchsetzende Bohrung (21) ausgeht, welche derart angeordnet und ausgerichtet ist, dass beim Einsetzen eines Formstücks (12) seine Schrägbohrung (16) damit in Flucht bringbar ist.

5. Verbinder nach einem der Ansprüche 1 bis 4, **dadurch gekennzeichnet, dass** der genannte spitze Winkel (α) zwischen 15° und 60°, bevorzugt zwischen 25° und 50°, beträgt.

6. Verbinder nach einem der Ansprüche 1 bis 5, **dadurch gekennzeichnet, dass** jeder Beschlag (4, 5) zumindest zwei Sacklöcher (11) hat, wobei die Sacklöcher (11) spiegelsymmetrisch zu einer zur genannten Stirnseite (8) orthogonalen, diese halbierenden Achse (A) der Anlageseite (7) angeordnet sind.

7. Verbinder nach einem der Ansprüche 1 bis 6, **dadurch gekennzeichnet, dass** jeder Beschlag (4, 5) an der genannten Stirnseite (8) eine zentrale, zur Stirnseite (8) orthogonale Stirnbohrung (24) hat, in welche ein Stift (25) oder eine Schraube einführbar ist.

8. Verbinder nach Anspruch 7, **dadurch gekennzeichnet, dass** zumindest einer der Beschläge (4, 5) von der genannten Stirnbohrung (24) vollständig durchsetzt ist.

9. Verbinder nach einem der Ansprüche 1 bis 8, **dadurch gekennzeichnet, dass** mit zunehmender Höhe des Absatzes (10) an der Stirnseite (8) jedes Beschlags (4, 5) seine Breite abnimmt und auf halber Höhe (h) der halben Breite (w) der Stirnseite (8) entspricht.

10. Verbinder nach einem der Ansprüche 1 bis 9, **dadurch gekennzeichnet, dass** die Schrägbohrung (16) jedes Formstücks (12) seine Grundfläche (13) durchsetzt, ohne die Kante (19) zwischen Grund- und Mantelfläche (13, 15) zu berühren.

11. Verbinder nach einem der Ansprüche 1 bis 10, **dadurch gekennzeichnet, dass** die Sacklöcher (11) eine Tiefe haben, die der Dicke (D) der Formstücke (12) von ihren Grund- zu ihren Deckflächen (13, 14) entspricht.

12. Verbinder nach einem der Ansprüche 1 bis 11, **dadurch gekennzeichnet, dass** jedes Formstück (12) im Sackloch (11) formschlüssig aufnehmbar ist und das Sackloch (11) an einem der genannten Stirnseite (8) abgewandten Bereich eine Ausnehmung (20) zum Eindrehen der Montageschraube (17) hat.

13. Verbinder nach einem der Ansprüche 1 bis 12, **dadurch gekennzeichnet, dass** die Grundfläche (13) jedes Formstücks (12) rund ist.

14. Verbinder nach einem der Ansprüche 1 bis 13, **dadurch gekennzeichnet, dass** jeder Beschlag (4, 5) von zumindest einer zur Montageseite (6) orthogonalen, der genannten Stirnseite (8) benachbarten Geradebohrung (22) für eine Zugschraube (23) durchsetzt ist.

15. Verbinder nach einem der Ansprüche 1 bis 12, **gekennzeichnet durch** zumindest zwei die Schrägbohrung (16) jedes Formstücks (12) flankierende, das Formstück (12) etwa orthogonal zur Grund- und Deckfläche (13, 14) durchsetzende weitere Bohrungen (26) für jeweils eine weitere Schraube (27).

## Claims

1. A connector for two components (2, 3), in particular wooden components, comprising two fittings (4, 5), each of which has a mounting side (6) for mounting on one of the components (2, 3) and an abutment side (7) opposite the mounting side (6) for contact against the other of the components (3, 2), wherein the two fittings (4, 5) may be hooked into one another at an end face (8) connecting the mounting and abutment sides (6, 7), for which purpose the end face (8) has, over its entire length (L) running along the abutment side (7), a shoulder (10) which is flush with the abutment side (7) and the width (B) of which in the orthogonal direction (R_{N}) to the abutment side (7) corresponds substantially to half the width (w) of the end face (8),
**characterised in that** the fittings (4, 5) are made of wood, preferably of plywood, or of wood-plastic composite and each fitting (4, 5) has one or more generally cylindrical blind holes (11) on its abutment side (7), wherein the connector (1) further comprises, for each blind hole (11), a molding (12) for removable insertion into the blind hole (11), said molding having a base surface (13), a top surface (14) parallel thereto, a substantially generally cylindrical lateral surface (15) connecting the two, and a slanted bore (16) for a mounting screw (17), wherein said slanted bore penetrates the molding (12) at an acute angle (α) to the base and top surfaces (13, 14).

2. The connector according to claim 1, **characterised in that** each molding (12) is made of metal, preferably steel.

3. The connector according to claim 1 or 2, **characterised in that** each of the blind holes (11) of each fitting (4, 5) has a minimum distance (δ) of 2 cm, preferably between 4 and 6.5 cm, from the periphery of the abutment side (7) of the fitting.

4. The connector according to any one of claims 1 to 3, **characterised in that** from each of the blind holes (11) of each fitting (4, 5) there extends a bore (21) which is inclined in the direction of said end face (8) of the fitting (4, 5) and which penetrates the mounting side (6) and which is arranged and oriented in such a way that, when a molding (12) is inserted, its slanted bore (16) may be brought into alignment with the bore.

5. The connector according to any one of claims 1 to 4, **characterised in that** said acute angle (α) is between 15° and 60°, preferably between 25° and 50°.

6. The connector according to any one of claims 1 to 5, **characterised in that** each fitting (4, 5) has at least two blind holes (11), wherein the blind holes (11) are arranged in mirror symmetry with respect to an axis (A) of the abutment side (7), said axis being orthogonal to and bisecting said end face (8).

7. The connector according to any one of claims 1 to 6, **characterised in that** each fitting (4, 5) has, at said end face (8), a central end-face bore (24) which is orthogonal to the end face (8) and into which a pin (25) or a screw may be inserted.

8. The connector according to claim 7, **characterised in that** at least one of the fittings (4, 5) is completely penetrated by said end-face bore (24).

9. The connector according to any one of claims 1 to 8, **characterised in that** as the height of the shoulder (10) at the end face (8) of each fitting (4, 5) increases, its width decreases and at half height (h) corresponds to half the width (w) of the end face (8).

10. The connector according to any one of claims 1 to 9, **characterised in that** the slanted bore (16) of each molding (12) penetrates the base surface (13) of the molding without touching the edge (19) between the base and lateral surfaces (13, 15).

11. The connector according to any one of claims 1 to 10, **characterised in that** the blind holes (11) have a depth corresponding to the thickness (D) of the moldings (12) from their base to their top surfaces (13, 14).

12. The connector according to any one of claims 1 to 11, **characterised in that** each molding (12) may be received in the blind hole (11) with a form fit and the blind hole (11) has a recess (20) for screwing in the mounting screw (17) in a region facing away from said end face (8).

13. The connector according to any one of claims 1 to 12, **characterised in that** the base surface (13) of each molding (12) is round.

14. The connector according to any one of claims 1 to 13, **characterised in that** each fitting (4, 5) is penetrated by at least one straight bore (22) for a tension screw (23), said straight bore being orthogonal to the mounting side (6) and adjacent to said end face (8).

15. The connector according to any one of claims 1 to 12, **characterised by** at least two further bores (26) for one further screw (27) each, said further bores flanking the slanted bore (16) of each molding (12) and penetrating the molding (12) approximately orthogonally to the base and top surfaces (13, 14).

## Revendications

1. Connecteur pour deux composants (2, 3), notamment des composants en bois, comprenant deux ferrures (4, 5) dont chacune possède un côté de montage (6) pour le montage sur respectivement l'un des composants (2, 3) et un côté de contact (7), situé en face du côté de montage (6), pour le contact avec respectivement l'autre des composants (3, 2), où les deux ferrures (4, 5) peuvent être accroché l'une dans l'autre sur un côté frontal (8) reliant le côté de montage et le côté de contact (6, 7), à cet effet, le côté frontal (8) possède sur toute sa longueur (L) s'étendant le long du côté de contact (7) un épaulement (10) affleurant avec le côté de contact (7) dont la largeur (B) dans la direction orthogonale (R_{N}) par rapport au côté de contact (7) correspond essentiellement à la demie largeur (w) du côté frontal (8),
**caractérisé en ce que** les ferrures (4, 5) sont en bois, de préférence en contreplaqué, ou en un matériau composite bois-plastique et chaque ferrure (4, 5) possède sur son côté de contact (7) un ou plusieurs trous borgnes (11) de forme généralement cylindrique, le connecteur (1) comprenant en outre une pièce de forme (12) pour chaque trou borgne (11) permettant une insertion amovible dans le trou borgne (11), ladite pièce de forme possède une surface de base (13), une surface de couverture (14) parallèle à celle-ci, une surface d'enveloppe (15) essentiellement généralement cylindrique reliant ces deux surfaces et un alésage oblique (16) pour une vis de montage (17), ledit alésage oblique traversant la pièce de forme (12) sous un angle (α) aigu par rapport aux surfaces de base et de couverture (13, 14).

2. Connecteur selon la revendication 1, **caractérisé en ce que** chaque pièce de forme (12) est en métal, de préférence en acier.

3. Connecteur selon la revendication 1 ou 2, **caractérisé en ce que** chacun des trous borgnes (11) de chaque ferrure (4, 5) a une distance minimale (δ) de 2 cm, de préférence entre 4 et 6,5 cm, de la périphérie de son côté de contact (7).

4. Connecteur selon l'une des revendications 1 à 3, **caractérisé en ce qu'**à partir de chacun des trous borgnes (11) de chaque ferrure (4, 5) part un alésage (21) incliné en direction dudit côté frontal (8) de la ferrure (4, 5), traversant le côté de montage (6), lequel est disposé et orienté de telle manière que, lors de la mise en place d'une pièce de forme (12), son alésage oblique (16) peut être mis en alignement avec celui-ci.

5. Connecteur selon l'une des revendications 1 à 4, **caractérisé en ce que** ledit angle aigu (α) se situe entre 15° et 60°, de préférence entre 25° et 50°.

6. Connecteur selon l'une des revendications 1 à 5, **caractérisé en ce que** chaque ferrure (4, 5) a au moins deux trous borgnes (11), les trous borgnes (11) étant disposés symétriquement en miroir par rapport à un axe (A) du côté de contact (7) orthogonal par rapport audit côté frontal (8) et bissectant celui-ci.

7. Connecteur selon l'une des revendications 1 à 6, caractérisé en ce chaque ferrure (4, 5) a, sur ledit côté frontal (8), un alésage frontal (24) central qui est orthogonal par rapport au côté frontal(8) et dans lequel on peut insérer une goupille (25) ou une vis.

8. Connecteur selon la revendication 7, **caractérisé en ce qu'**au moins une des ferrures (4, 5) est traversée complètement par ledit alésage frontal (24).

9. Connecteur selon l'une des revendications 1 à 8, **caractérisé en ce qu'**avec une hauteur du épaulement (10) augmentant sur le côté frontal (8) de chaque ferrure (4, 5), sa largeur diminue et, à mi-hauteur (h), correspond à la demie largeur (w) du coté frontal (8).

10. Connecteur selon l'une des revendications 1 à 9, **caractérisé en ce que** l'alésage oblique (16) de chaque pièce de forme (12) traverse sa surface de base (13) sans toucher le bord (19) entre les surfaces de base et d'enveloppe (13, 15).

11. Connecteur selon l'une des revendications 1 à 10, **caractérisé en ce que** les trous borgnes (11) ont une profondeur qui correspond à l'épaisseur (D) des pièces de forme (12) à partir de leur surface de base jusqu'à leur surface de couverture (13, 14).

12. Connecteur selon l'une des revendications 1 à 11, **caractérisé en ce que** chaque pièce de forme (12) peut être logée dans le trou borgne (11) par complémentarité des formes et le trou borgne (11) a un évidement (20) au niveau d'une zone opposée audit côté frontal (8) pour le vissage d'une vis de montage (17).

13. Connecteur selon l'une des revendications 1 à 12, **caractérisé en ce que** la surface de base (13) de chaque pièce de forme (12) est ronde.

14. Connecteur selon l'une des revendications 1 à 13, **caractérisé en ce que** chaque ferrure (4, 5) est traversée par au moins un alésage rectiligne (22) pour une vis de tension (23), ledit alésage rectiligne étant orthogonal par rapport au côté de montage (6) et adjacent audit côté frontal (8).

15. Connecteur selon l'une des revendications 1 à 12, **caractérisé par** au moins deux autres alésages (26), chacun pour une autre vis (27), lesdits autres alésages flanquant l'alésage oblique (16) de chaque pièce de forme (12) et traversant à peu près de manière orthogonale la pièce de forme (12) par rapport aux surfaces de base et de couverture (13, 14).
